# EUROPÄISCHE PATENTSCHRIFT

(11) **EP 1 595 237 B1**
(45) Veröffentlichungstag und Bekanntmachung des Hinweises auf die Patenterteilung: **17.05.2006**
(21) Anmeldenummer: 04710334.6
(22) Anmeldetag: 12.02.2004
(51) Int. Cl.: G08G 5/06, G01S 13/90

(54) **SYSTEM ZUR ÜBERWACHUNG EINES FLUGHAFENGELÄNDES**
SYSTEM FOR MONITORING AIRPORT AREAS
SYSTEME DE SURVEILLANCE DU TERRAIN D'UN AEROPORT

(30) Priorität: 19.02.2003 DE 10306922
(43) Veröffentlichungstag der Anmeldung: 16.11.2005
(73) Patentinhaber: EADS Deutschland GmbH, 85521 Ottobrunn (DE)
(72) Erfinder: KALTSCHMIDT, Horst, 85579 Neubiberg (DE); KLAUSING, Helmut, 82234 Hochstadt (DE)
(74) Vertreter: Meel, Thomas
(86) Internationale Anmeldenummer: PCT/DE2004/000249
(87) Internationale Veröffentlichungsnummer: WO 2004/075139

(56) Entgegenhaltungen:
- FR-A- 2 841 387
- US-B1- 6 282 488
- MONZEL F G ET AL: "SURFACE MOVEMENT GUIDANCE AND CONTROL SYSTEM" ELECTRICAL COMMUNICATION, ALCATEL. BRUSSELS, BE, 1993, Seiten 51-59, XP000360408 ISSN: 0013-4252
- KLAUSING H ET AL: "Feasibility of a synthetic aperture radar with rotating antennas (ROSAR)" IEEE INTERNATIONAL RADAR CONFERENCE, 7. Mai 1990 (1990-05-07), Seiten 51-56, XP010007443

## Beschreibung

Die Erfindung betrifft ein System zur Überwachung eines Flughafengeländes gemäß dem Oberbegriff des Patentanspruchs 1.

Das Verkehrsmanagement auf der Start- und Landebahn, dem Roll- und Vorfeld sowie dem Flugverkehr im Nahbereich des Flughafens setzt die hochaufgelöste, allwettertaugliche Erfassung aller Verkehrsteilnehmer, insbesondere Flugzeuge, Personen und Objekte, z.B. verlorengegangene Gepäckstücke, Flugzeug- oder Fahrzeugteile, voraus.

In US 6,282,488 B1 wird ein System zur Überwachung der Bewegungen auf einem Flughafengelände sowie zur Überwachung an- und abfliegender Flugzeuge beschrieben. Die Überwachung der Bewegungen am Boden erfolgt dabei mittels Bodenradargeräte. Die Überwachung an- und abfliegender Flugzeuge erfolgt mittels weiterer Radargeräte. Ein Nachteil dabei ist, dass die verwendeten Bodenradargeräte eine hohe Bodenclutterempfindlichkeit aufweisen. Ein weiterer Nachteil ist, dass durch die Vielzahl von benötigten Radargeräten ein großes Datenvolumen verarbeitet werden muß.

Aufgabe der Erfindung ist es, ein abbildendes allwetterfähiges System bestehend aus mehreren Sensoren zur Überwachung der Bewegungen auf und über einem Flughafengelände zu schaffen, bei dem Radargeräte zum Einsatz kommen, welche eine geringe Bodenclutterempfindlichkeit aufweisen und welche gleichzeitig den Luftraum und den Bodenbereich des Flughafengeländes überwachen.

Diese Aufgabe wird mit dem System gemäß Patentanspruch 1 gelöst. Vorteilhafte Ausführungen der Erfindung sind Gegenstand von Unteransprüchen.

Gemäß der Erfindung ist ein Sensor ein Radargerät mit einer Vielzahl von Antennenelementen, welche auf einer gekrümmten Oberfläche eines Antennenträgers angebracht sind und zeitlich nacheinander angesteuert werden, wobei ein erster Teil der Antennenelemente auf einer ersten Kreislinie auf der Oberfläche des Antennenträgers und ein zweiter Teil der Antennenelemente auf einer zur ersten Kreislinie senkrechten Kreislinie angeordnet sind und wobei die Informationen des Radargeräts in einem ersten ROSAR-Prozeß zur Abbildung der Lage auf dem Boden und in einem zweiten ROSAR-Prozeß zur Abbildung der Höhen der zu beobachtenden Flugobjekte ausgewertet werden.

Im folgenden wird das ROSAR-Prinzip kurz erläutert. Radarsysteme mit synthetischer Apertur (SAR = synthetic aperture radar), wie sie bei Flugzeugen oder Satelliten zum Einsatz kommen, sind für eine geradlinige Bewegung der Antenne ausgelegt. SAR-Systeme liefern Bilder hoher Auflösung senkrecht zur Bewegungsrichtung, d.h. die Antennen blicken in Bewegungsrichtung seitwärts, um eine große Apertur zu erzeugen. Aus US 2002/0135505 A1 und WO 01/23907 ist bekannt, dass beim ROSAR (ROSAR = rotating synthetic apertur radar) die Roation einer Antenne zur Erzeugung der synthetischen Apertur genutzt wird. Das Abtasten des Geländestreifens aus verschiedenen Blickwinkeln wird durch die Rotation der Antenne erreicht, ohne dass eine translatorische Bewegungskomponente der Trägerplattform, wie es im Gegensatz dazu beim SAR der Fall ist, notwendig ist. Die Rotation sorgt für eine Rundumsicht, d.h. das ROSAR kann einen Winkelbereich von 360° überdecken.

Bei dem erfindungsgemäßen Sensor wird die Drehbewegung der Antenne simuliert, d.h. die Drehbewegung wird nicht real wie beim bekannten ROSAR-Verfahren, sondern nur virtuell durchgeführt. Die auf einem ruhenden Antennenträger erfindungsgemäß angeordneten Antennenelemente werden zeitlich nacheinander mit Sendesignalen angesteuert und zeitlich nacheinander werden die reflektierten Empfangssignale abgetastet. Die zeitlich nacheinander erfolgende Ansteuerung der ruhenden Antennenelemente ermöglicht es, die Informationen der einzelnen Antennenelemente nach dem bekannten ROSAR-Verfahren auszuwerten. Neben der hoch aufgelösten Allwettersicht erreicht man auch die dem ROSAR-Verfahren eigentümliche vorteilhafte 360°-Rundumsicht. Im weiteren wird unter einem Radargerät, dessen Informationen nach dem ROSAR-Verfahren ausgewertet werden, ein Radargerät verstanden, dessen Antennenelemente zeitlich nacheinander angesteuert und abgetastet werden.

Ein Vorteil dieser Systemkomponente ist, dass die Geschwindigkeit der virtuellen Antennendrehbewegung beliebig wählbar. Hieraus entstehen weitere Vorteile hinsichtlich geringer Positionierungsfehler von detektierten stationärer oder bewegter Objekte.

Mit der erfindungsgemäßen Systemkomponente ist es somit möglich, mittels der in einer ersten horizontalen Ebene angeordneten Antennenelementen die Überwachung des Flughafengeländes im Bodenbereich und mittels der in der dazu senkrechten Ebene angeordneten Antennenelemente den Luftraum des Flughafens zu gewährleisten. Außerdem ist es mit der erfindungsgemäßen Systemkomponente möglich, die Flughöhen an- oder abfliegender Flugkörper zu bestimmen.

Ein Vorteil hierbei ist, dass die erfindungsgemäße Systemkomponente sehr leicht und ohne großen Flächenverbrauch, wie bei Radargeräten mit realer Apertur und gleich guter Auflösung nicht zu umgehen ist, realisierbar ist. Kritische Windlasten, denen mit schweren Konstruktionen begegnet werden muß, treten hier nicht auf. Die Überwachung des Bodenbereichs und des Luftraums des Flughafens kann somit in einer Systemkomponente zusammengefaßt werden. Aufgrund der hohen Höhenauflösung des erfindungsgemäßen Systems entfällt im Gegensatz zu bekannten Systemen die Forderung nach Sekundärradar-Transpondern in den zu beobachtenden Flugkörpern. Auch ein am Boden erforderliches Sekundärradar kann eingespart werden. Ein mögliches Anwendungsgebiet des erfindungsgemäßen Systems liegt z.B. im militärischen Bereich bei der Überwachung nicht-kooperativer Ziele.

Ein weiterer Vorteil ist, dass die erfindungsgemäße Systemkomponente mobil einsetzbar ist und somit auch kurzfristig auf Start- und Landebahnen positioniert werden kann.

Die Erfindung ist bei der Überwachung eines großen Flughafengeländes nicht auf den Einsatz einer einzigen erfindungsgemäßen Systemkomponente beschränkt. Abhängig von aufgrund z.B. größerer Gebäude auftretender Abschattungseffekte können selbstverständlich mehrere erfindungsgemäße Systemkomponenten zum Einsatz kommen. Zweckmäßig werden in einer vorteilhaften Ausführung der Erfindung weitere abbildende Sensoren, insbesondere im sichtbaren oder infraroten Wellenlängenbereich, verwendet.

Mit dem erfindungsgemäßen System ist es somit möglich, wetterunabhängig alle Verkehrsteilnehmer sowie Objekte auf dem Flughafengelände hochaufgelöst zu erfassen.

Zweckmäßig kann eine weitere Systemkomponente ein bekanntes ROSAR-Radargerät sein. Beim ROSAR wird die Rotation der an der Spitze des Rotors angebrachten Antenne bekanntermaßen zur Erzeugung einer synthetischen Apertur genutzt. Das zur hochauflösenden Bilderzeugung notwendige Abtasten des Geländestreifens aus verschiedenen Blickwinkeln wird durch die Rotation der Antenne erreicht. Die Rotation sorgt für eine Rundumsicht, d.h. mit einem ROSAR-Radargerät ist ein Winkelbereich von 360° detektierbar.

Vorteilhaft können auch weitere Systemkomponenten eingesetzt werden, deren Daten nach einem ROSAR-Prozeß ausgewertet werden.

Die Daten der Systemkomponenten, welche nach einem ROSAR-Prozeß ausgewertet werden, werden vorteilhaft einer ersten Datenverarbeitungseinheit mit ikonischer Bildverarbeitung zugeführt. Aus den Bilddaten können bewegte oder stationäre Objekte erkannt und klassifiziert werden. Bei der ikonischen Bildverarbeitung werden jedem Bildpunkt Intensitätswerte, auch als Grauwerte bezeichnet, zugeordnet. Die Objekterkennung erfolgt bei der ikonischen Bildverarbeitung durch Bildberglcih, beispielsweise durch Korrelation des zu erkennenden Objekts mit dem Bildsignal des gesamten Bildes.

Vorteilhaft ist eine weitere Datenverarbeitungseinheit mit symbolischer Bildverarbeitung vorhanden, welcher die Daten der ersten Datenverarbeitungseinheit und die Daten der abbildenden Sensoren zugeführt wird. Bei der symbolischen Bildverarbeitung werden in den Bilddaten sogenannte Bildprimitive, z.B. Linien, Kanten oder Rundungen erkannt. Diesen Bildprimitiven werden vorgebbare Symbole zugeordnet, welche weiterverarbeitet werden. Zum Beispiel kann ein Panzer durch 4 zusammenhängende Linien mit Rundungen definiert sein. Selbstverständlich können die Bilddaten bereits mittels der ikonischen Bildverarbeitung bearbeitet worden sein.

Zweckmäßig können bei der ikonischen und/oder symbolischen Bildverarbeitung Spurerkennungs- und Spurverfolgungsverfahren berücksichtigt werden.

Das Ergebnis der symbolischen Bildverarbeitung ist die Darstellung der aktuellen Lage auf allen Teilbereichen des Flughafens. Vorteilhaft werden diese, in der zweiten Datenverarbeitungseinheit erzeugten Bilddaten auf einem Display sichtbar gemacht. Des Weiteren ist es vorteilhaft möglich, die Daten einer Kommunikationseinheit zuzuführen, von wo die Daten über Funk an die Flughafenüberwachung und/oder andere Kommunikationsteilnehmer, z.B. Fahrzeuge oder Flugzeuge übermittelt werden. Die Übermittlung der Daten erfolgt bevorzugt mit bereits am Flughafen vorhandenen Kommunikationsmitteln. Über die Kommunikationseinrichtungen können auch Daten, die aus anderen Quellen, z.B. Pilotenfunk, stammen, zur Verbesserung der Erkennung der aktuellen Lage herangezogen werden.

Mittels der erzeugten Bilddaten kann bevorzugt die aktuelle Gefahrenlage, z.B. Fahrzeug- oder Flugzeugkollisonen analysiert werden. Notwendige Aktionen zur Verhinderung einer analysierten Gefahr wird zweckmäßig automatisch ausgegeben.

Die Positionsbestimmung der Systemkomponenten erfolgt vorteilhaft mittels des Global-Positioning-Systems (GPS). Zweckmäßig wird dabei das Differential-GPS verwendet, um eine höhere Positionsgenauigkeit zu erreichen. Zur Übertragung der Daten zwischen den Sensoren und den Datenverarbeitungseinheiten kann vorteilhaft ein Mobilkommunikationsnetzwerk auf GSM-Basis verwendet werden. Zweckmäßig sind hierbei sämtliche Forderungen signaltechnischer Sicherheit zur Vermeidung von Ausfällen zu erfüllen. Insbesondere ist es zweckmäßig, Kommunikationsnetzwerke redundant auszulegen um eine höhere Verfügbarkeit zu gewährleisten. Der Einsatz der Mobilkommunikation ermöglicht eine beidseitige Kommunikation, d.h. Vollduplexkommunikation und Gruppenkommunikation.

Wird eine völlige Unabhängigkeit des erfindungsgemäßen Systems von der Infrastruktur eines Flughafens gefordert, z.B. bei militärischen Einsätzen in nichtkooperativer Umgebung, so kann die Datenübermittlung mittels HF/VHF-Datenlinks erfolgen. Selbstverständlich ist auch eine Datenübermittlung über eine Satellitenverbindung möglich.

Die Übermittlung der Daten kann selbstverständlich auch mittels Kabel, z.B. Glasfaserkabel, erfolgen.

Die Erfindung wird im weiteren anhand von Zeichnungen näher erläutert. Es zeigen:
- Fig. 1: eine beispielhafte schematische Darstellung eines Flughafengeländes mit einem erfindungsgemäßen System zur Überwachung des Flughafens,
- Fig. 2: eine beispielhafte Anordnung von Antennenelementen auf zwei senkrecht zueinander stehenden Kreislinien auf der Oberfläche eines Antennenträgers eines erfindungsgemäßen Radargeräts.

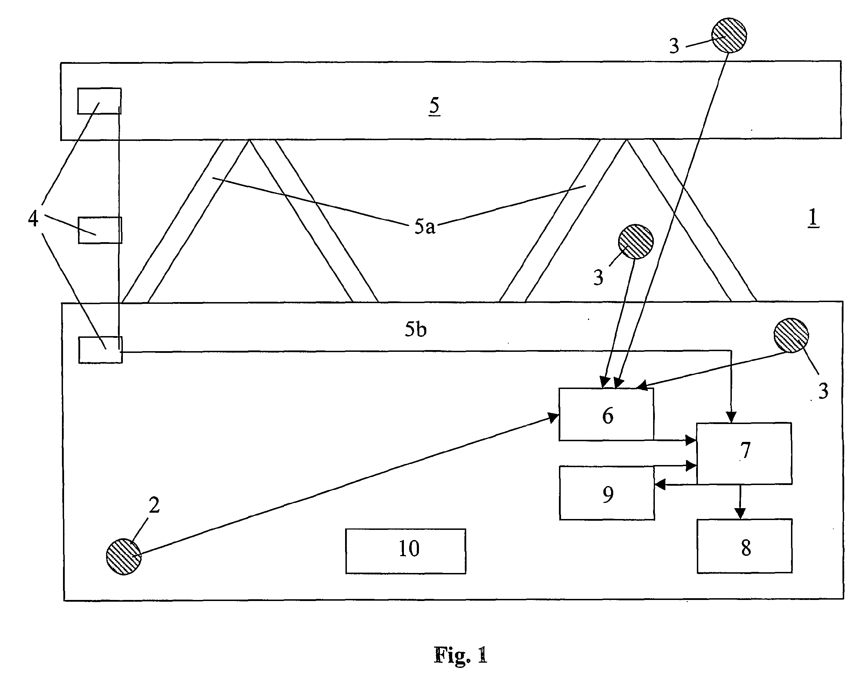

Fig. 1 zeigt eine schematische Darstellung eines Flughafengeländes mit einem erfindungsgemäßen System zur Erkennung von Hindernissen und Überwachung von Bewegungen auf und über einem Flughafengelände. Auf dem Flughafengelände 1 ist eine erfindungsgemäße Systemkomponente 2 zur gleichzeitigen Überwachung des Boden- und Luftbereichs vorhanden. Zur Vermeidung von Abschattungen aufgrund größerer Gebäude, z.B. durch den Tower (nicht dargestellt) sind weitere nach dem ROSAR-Prinzip arbeitende Systemkomponenten 3 vorhanden. Außerdem sind im Bereich der Start- und Landebahn 5 und des Roll- und Vorfeldes 5a, 5b weitere abbildende, beispielsweise optische Sensoren 4 vorhanden.

Die Daten der nach dem ROSAR-Prinzip arbeitenden Systemkomponenten 2,3 werden einer ersten Datenverarbeitungseinheit 6 mit ikonischer Bildverarbeitung zugeführt. Von dort werden die durch den ROSAR-Verarbeitungsprozess reduzierten Daten einer zweiten Datenverarbeitungseinheit 7 mit symbolischer Bildverarbeitung zugeführt. Diese zweite Datenverarbeitungseinheit 7 wird ebenfalls mit Daten der abbildenden Sensoren 4 versorgt. Eine geeignete Verarbeitung der Daten ergibt ein Bild der aktuellen Lage auf dem Flughafengelände 1 und im Luftraum über dem Flughafen 1. Diese Informationen werden einem Display 8 zugeführt und sichtbar gemacht. Die Informationen können darüber hinaus auch einer Kommunikationseinheit 9 zugeführt werden, welche mit anderen kooperationsfähigen Verkehrsteilnehmer 10 in Funkkontakt steht. Über die Kommunikationseinheit 9 werden dem symbolischen Bildverarbeitungsprozess weitere Daten aus weiteren Quellen, wie z. B. aus dem Pilotensprechfunk, zugeführt.

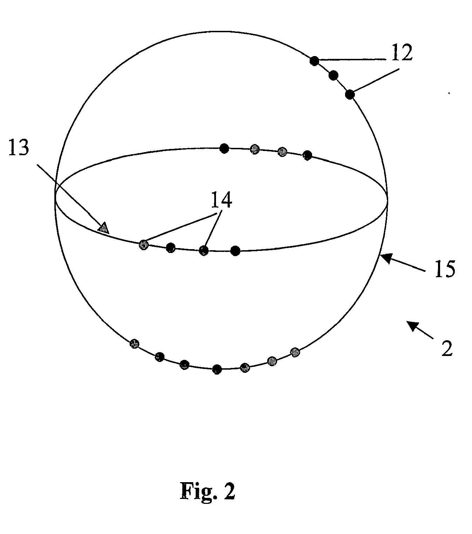

Fig. 2 zeigt eine beispielhafte Anordnung von Antennenelementen auf zwei senkrecht zu einander stehenden Kreisringen 13, 15 auf der Oberfläche eines Antennenträgers 2a eines erfindungsgemäßen Radargeräts (nicht dargestellt). Der beispielhafte Antennenträgers 2a ist eine Kugel. Selbstverständlich kann der Antennenträger 2a jede beliebige um mindestens 2 Achsen rotationssymmetrische Form annehmen. Die Antenne des Radargeräts kann dabei als Dipol oder Hornstrahler ausgebildet sein.
Auf der Oberfläche des beispielhaft kugelförmigen Antennenträgers 2a sind Antennenelemente 12, 14 auf Kreislinien 13, 15 angeordnet, die jeweils eine Ebene bilden. Die beiden durch die Kreislinien 13, 15 gebildeten Ebenen stehen dabei senkrecht aufeinander. Bevorzugt weisen die Antennenelemente 12, 14 einen gleichen Abstand zueinander auf.

## Patentansprüche

1. System zur Erkennung von Hindernissen und Überwachung von Bewegungen auf und über einem Flughafengelände (1) mit Sensoren (2, 3, 4), **dadurch gekennzeichnet, dass** ein Sensor (2) ein Radargerät mit einer Vielzahl von Antennenelementen (12, 14) ist, welche auf einer gekrümmten Oberfläche (15) eines Antennenträgers (2a) angebracht sind und zeitlich nacheinander angesteuert werden, wobei ein erster Teil der Antennenelemente (14) auf einer ersten Kreislinie (13) auf der Oberfläche des Antennenträgers (2a) und ein zweiter Teil der Antennenelemente (12) auf einer zur ersten Kreislinie (13) senkrechten Kreislinie (15) angeordnet sind und wobei die Informationen des Radargeräts (2) in einem ersten ROSAR-Prozeß zur Abbildung der Lage auf dem Boden und in einem zweiten ROSAR-Prozeß zur Abbildung der Höhen der zu beobachtenden Flugobjekte ausgewertet werden.

2. System nach Anspruch 1, **dadurch gekennzeichnet, dass** eine weitere Komponente des Systems abbildende Sensoren (4), insbesondere im infraroten und sichtbaren Wellenlängenbereich sind.

3. System nach einem der vorangehenden Ansprüche, **dadurch gekennzeichnet, dass** eine weitere Komponente des Systems ein ROSAR-Radargerät ist, welches durch Rotation der Antenne eine synthetische Apertur erzeugt..

4. System nach einem der vorangehenden Ansprüche, **dadurch gekennzeichnet, dass** eine weitere Komponente des Systems Radargeräte (3) sind mit einer Vielzahl von Antennenelementen, welche auf einer gekrümmten Oberfläche einer Antenne auf einer horizontalen Kreislinie angebracht sind und zeitlich nacheinander angesteuert werden, wobei die Informationen des Radargeräts nach einem ROSAR-Prozeß ausgewertet werden.

5. System nach einem der vorangehenden Ansprüche, **dadurch gekennzeichnet, dass** eine erste Datenverarbeitungseinheit (6) mit ikonischer Bildverarbeitung vorhanden ist, welcher die nach einem ROSAR-Prozeß ausgewerteten Daten der Radargeräte (2, 3) zugeführt wird.

6. System nach Anspruch 5, **dadurch gekennzeichnet, dass** eine zweite Datenverarbeitungseinheit (7) mit symbolischer Bildverarbeitung vorhanden ist, welcher die Daten der ersten Datenverarbeitungseinheit (6) und die Daten der abbildenden Sensoren (4) zugeführt wird.

7. System nach Anspruch 6, **dadurch gekennzeichnet, dass** die in der zweiten Datenverarbeitungseinheit (7) erzeugten Bilddaten auf einem Display (8) sichtbar gemacht und/oder einer Kommunikationseinheit (9), von wo sie über Funk an die Flughafenüberwachung und/oder andere Kommunikationsteilnehmer (10) weitergeleitet werden, zugeführt werden.

8. System nach einem der vorangehenden Ansprüche, **dadurch gekennzeichnet, dass** die Positionsbestimmung der Systemkomponenten (2, 3, 4) über das Global-Positioning-System, insbesondere das Differential-GPS, erfolgt.

9. System nach einem der Ansprüche 5-8, **dadurch gekennzeichnet, dass** zur Übermittlung von Daten ein Mobilkommunikationsnetzwerk auf GSM-Basis vorhanden ist.

10. System nach einem der Ansprüche 5-9, **dadurch gekennzeichnet, dass** der Datenverarbeitungseinheit (7) von der Kommunikationseinheit (9) Daten, insbesondere Daten aus dem Pilotenfunk, zugeführt werden.

11. System nach einem der Ansprüche 5-10, **dadurch gekennzeichnet, dass** die Datenverarbeitungseinheit (7) Sprachsignale in digitale Daten umwandelt zur Verbesserung der Analyse der aktuellen Bewegungsvorgänge auf dem Flughafengelände (1).

## Claims

1. System for detecting obstacles and monitoring movements on and over an airport territory (1) with the aid of sensors (2, 3, 4), **characterized in that** a sensor (2) is a radar unit having a multiplicity of antenna elements (12, 14) which are fitted on a curved surface (15) of an antenna carrier (2a) and are controlled temporally one after another, a first portion of the antenna elements (14) being arranged on a first circular line (13) on the surface of the antenna carrier (2a), and a second portion of the antenna elements (12) being arranged on a circular line (15) perpendicular to the first circular line (13), and the information of the radar unit (2) being evaluated in a first ROSAR process in order to display the position on the ground, and in a second ROSAR process in order to display the heights of the flying objects to be observed.

2. System according to Claim 1, **characterized in that** a further component of the system is imaging sensors (4), in particular in the infrared and visible wavelength regions.

3. System according to one of the preceding claims, **characterized in that** a further component of the system is a ROSAR radar unit which produces a synthetic aperture by rotating the antenna.

4. System according to one of the preceding claims, **characterized in that** a further component of the system is radar units (3) having a multiplicity of antenna elements which are fitted on a curved surface of an antenna on a horizontal circular line and are driven temporally one after another, the information of the radar unit being evaluated using a ROSAR process.

5. System according to one of the preceding claims, **characterized in that** a first data processing unit (6) with iconic image processing is present and is fed the data of the radar units (2, 3) that have been evaluated using a ROSAR process.

6. System according to Claim 5, **characterized in that** a second data processing unit (7) with symbolic image processing is present and is fed the data of the first data processing unit (6) and the data of the imaging sensors (4).

7. System according to Claim 6, **characterized in that** the image data generated in the second data processing unit (7) are visualized on a display (8) and/or a communication unit (9), from where they are fed by radio to the airport monitoring, and/or are passed on to other communication subscribers (10).

8. System according to one of the preceding claims, **characterized in that** the positions of the system components (2, 3, 4) are determined using the Global Positioning System, in particular the differential GPS.

9. System according to one of Claims 5-8, **characterized in that** a GSM-based mobile communication network is present for transmitting data.

10. System according to one of Claims 5-9, **characterized in that** the data processing unit (7) is fed data, in particular flight-deck radio data, by the communication unit (9).

11. System according to one of Claims 5-10, **characterized in that** the data processing unit (7) converts speech signals into digital data in order to improve the analysis of the current movement operations on the airport territory (1).

## Revendications

1. Système de reconnaissance d'obstacles et de surveillance de mouvements sur et au-dessus du terrain d'un aéroport (1) avec des détecteurs (2, 3, 4), **caractérisé en ce qu'**un détecteur (2) est un appareil radar avec une pluralité d'éléments d'antenne (12, 14), qui sont installés sur une surface courbe (15) d'un support d'antenne (2a) et qui sont activés l'un après l'autre dans le temps, dans lequel une première partie des éléments d'antenne (14) sont disposés sur une première circonférence (13) sur la surface du support d'antenne (2a) et une deuxième partie des éléments d'antenne (12) sont situés sur une circonférence (15) perpendiculaire à la première circonférence (13) et dans lequel les informations de l'appareil radar (2) sont évaluées dans un premier processus ROSAR pour représenter la position sur le sol et dans un deuxième processus ROSAR pour représenter l'altitude des objets volants à observer.

2. Système selon la revendication 1, **caractérisé en ce qu'**une autre composante du système est constituée par des détecteurs de représentation (4), en particulier dans le domaine des longueurs d'onde infrarouges et visibles.

3. Système selon l'une quelconque des revendications précédentes, **caractérisé en ce qu'**une autre composante du système est un appareil radar ROSAR, qui produit une ouverture synthétique par rotation de l'antenne.

4. Système selon l'une quelconque des revendications précédentes, **caractérisé en ce qu'**une autre composante du système est constituée par des appareils radar (3) avec une pluralité d'éléments d'antenne, qui sont disposés sur une circonférence horizontale sur une surface courbe d'une antenne et qui sont activés l'un après l'autre dans le temps, dans lequel les informations de l'appareil radar sont évaluées suivant un processus ROSAR.

5. Système selon l'une quelconque des revendications précédentes, **caractérisé en ce qu'**il comporte une première unité de traitement de données (6) avec traitement d'image iconique, à laquelle les données des appareils radar (2, 3) évaluées suivant un processus ROSAR sont transmises.

6. Système selon la revendication 5, **caractérisé en ce qu'**il comporte une deuxième unité de traitement de données (7) avec traitement d'image symbolique, à laquelle les données de la première unité de traitement de données (6) et les données des détecteurs de représentation (4) sont transmises.

7. Système selon la revendication 6, **caractérisé en ce que** les données d'image produites dans la deuxième unité de traitement (7) sont visualisées sur un écran d'affichage (8) et/ou sont transmises à une unité de communication (9), d'où elles sont transmises par radio à la surveillance de l'aéroport et/ou à d'autres participants à la communication (10).

8. Système selon l'une quelconque des revendications précédentes, **caractérisé en ce que** la détermination de la position des composantes du système (2, 3, 4) est effectuée par le système de positionnement mondial, en particulier le GPS différentiel.

9. Système selon l'une quelconque des revendications 5 à 8, **caractérisé en ce qu'**il comporte un réseau de communication mobile à base de GSM pour la transmission de données.

10. Système selon l'une quelconque des revendications 5 à 9, **caractérisé en ce que** des données, en particulier des données de la radio des pilotes, sont transmises à l'unité de traitement des données (7) par l'unité de communication (9).

11. Système selon l'une quelconque des revendications 5 à 10, **caractérisé en ce que** l'unité de traitement de données (7) convertit des signaux vocaux en données numériques pour améliorer l'analyse des mouvements actuels sur le terrain de l'aéroport (1).
